# EUROPEAN PATENT SPECIFICATION

(11) **EP 0 245 856 B1**
(45) Date of publication and mention of the grant of the patent: **13.07.1994**
(21) Application number: 87106963.9
(22) Date of filing: 14.05.1987
(51) Int. Cl.: C08L 51/04, C08L 23/02

(54) **Strengthened high impact styrenic polymers showing improved physical-mechanical properties**
Verstärkte schlagzähe Styrolpolymere mit verbesserten physischen Eigenschaften
Polymères styréniques renforcés résistant aux chocs à propriétés physiques améliorées

(30) Priority: 14.05.1986 IT 2043386; 30.12.1986 IT 2288686
(43) Date of publication of application: 19.11.1987
(73) Proprietor: ENICHEM S.p.A., 20124 Milano (IT)
(72) Inventor: Cigna, Giuseppe, I-46100 Mantova (IT); Fasulo, Gian Claudio, San Silvestro Di Curtantone Mantova (IT); Biglione, Gianfranco, I-46100 Mantova (IT); Borghi, Italo, T-44100 Ferrara (IT)
(74) Representative: Zumstein, Fritz, Dr.

(56) References cited:
- PATENT ABSTRACTS OF JAPAN, vol. 7, no. 77 (C-159)[1222], 30th March 1983; & JP-A-58 7442 (SUMITOMO NAUGATUCK K.K.) 17-01-1983

## Description

### FIELD OF THE INVENTION

The present invention relates to strengthened high impact stryrenic polymers showing improved physical-mechanical features and in particular toughness and flexibility, impact strength at room temperature and at temperatures lower than the room one and break elongation.

More particularly, the present invention relates to strengthened high impact styrenic polymers showing high toughness and flexibility, high impact strength at room temperature and at temperatures lower than the room one, which polymers are particularly suitable for injection molding and thermoforming of compact or foamed articles to be used in the field of packaging, electrical household appliances, motor-car, teleelectronics and so on.

### BACKGROUND OF THE INVENTION

As known, the high impact styrenic polymers are obtained by bulk or bulk-suspension polymerization of solutions of polybutadiene or styrene-butadiene rubbers or of saturated rubbers of ethylene-propylene (EPM), ethylene-propylene-diene (EPDM) kind, in styrene alone or in a mixture of styrene with other polymerizable ethylenically unsaturated monomers. Generally, the high impact styrene polymers based on EPM or EPDM rubber, are obtained in the form of masterbatch having a high rubber content and are used either as such or in blends with stiff matrixes (such as for instance a styreneacrylonitrile (SAN) copolymer or others) in order to obtain polymeric materials suitable for injection molding and thermoforming.

Such high impact polymers have excellent toughness properties at room temperature, particularly at high rubber concentrations, whereas the impact strength at low temperatures (for instance at -30°C) and break elongation, in tensile stress tests, are not always satisfactory for all applications.

Such drawbacks may be avoided or limited by blending the high impact polymers with other polymers having the lacking properties, in order to obtain a material having the desired combination of features. Such approach, however, was successful only in scanty cases; in fact, the blending generally leads to the combination of the worst features of every component, thereby obtaining a material having such poor properties, that it is of no commercial or practical value.

JP-A- 58-7442 relates to thermoplastic resin compositions consisting of:
- 100 parts by weight of a resin composition (AES) comprising 100-5 parts by weight of a graft copolymer (A) obtained by polymerizing two or more vinyl aromatic or cyanogenated vinyl compounds and other copolymerizable monomers in the presence of an ethylene-propylene rubber and 0 to 95 parts by weight of copolymer (B) obtained by polymerizing two or more compounds chosen from the above mentioned groups of polymerizable monomers (SAN) and
- 0.1 to 10% by weight of a compound selected from some engineering polymers including polyethylene.

Object of the present invention is to provide high impact styrene polymers containing an olefinic rubber, preferably an ethylene-propylene or an ethylene-propylene-diene rubber, having high values of toughness and flexibility and endowed with improved features of impact strength at room temperature and at temperatures lower than the room one, and of break elongation.

### DISCLOSURE OF THE INVENTION

According to the present invention, high impact styrene polymers containing an ethylene-propylene or an ethylene-propylene-diene rubber, and showing high values of toughness and flexibility and high features of impact strength, at room temperature and at temperatures lower than the room one, and of break elongation, may be obtained by dispersing into said polymers a polyolefin as a strengthening component. It concerns in detail a strengthened high impact styrenic polymer having improved physical-mechanical properties, in particular impact strength at room temperature and at lower temperatures, high break elongation and high elastic modulus, which polymer comprises a styrene polymer containing as dispersed therein an olefinic rubber and at least one polyolefin,
characterized in that
- the high impact styrenic polymer consists of: 70-90% by weight of a stiff matrix consisting of a copolymer containing 65-80% by weight of styrene and 35-20% by weight of acrylonitrile, and 30-10% by weight of an ethylene-propylene or ethylene-propylene-diene rubber;
- the amount of the polyolefin is from 0.01 to 15 % by weight, with respect to the polymer;
- the R₁ ratio: polyolefin/polyolefin+olefinic rubber is not over 0.5; and
- the R₂ ratio: polyolefin+olefinic rubber/olefinic rubber+polyolefin+monomers is between 0.1 and 0.3.

The polyolefin may be polyethylene, polypropylene or an ethylene-propylene copolymer, having a prevailing ethylene content, such as for instance a copolymer consisting of 75-98% by weight of ethylene and of 25-2% of propylene; polyolefinic waxes may be used as well.

The term "polyethylene" includes any ethylene polymer having a density ranging from 0.90 to 0.97 g/cm³, for instance low density polyethylene (LDPE), linear low density polyethylene (LLDPE) and high density polyethylene (HDPE).

The particle size of the polyolefin, dispersed in the polymeric system, is fine and has generally an average diameter ranging between 0.02 and 5 micrometers. Such particle size is particularly preferred in order to reach a higher density of the particles in the matrix unit therefore a uniform strengthening degree throughout the matrix.

The term "high impact styrenic polymer containing an olefinic rubber" comprises any copolymeric material consisting of:
a) 70-90% by weight of a stiff matrix consisting of a copolymer containing 65-80% by weight of styrene and 35-20% by weight of acrylonitrile, wherein there is dispersed:
b) 30-10% by weight of an elastomeric phase consisting of an ethylenepropylene or ethylene-propylene-diene rubber, respectively known as EPM and EPDM, that may be grafted completely or partly to the chains of the styrene polymer.

The high impact styrenic copolymer containing said olefinic rubber may be used either alone or in mixture with up to 50% by weight of polystyrene or with a copolymer containing chemically bound at least 50% by weight of one or more compounds having general formula (I) 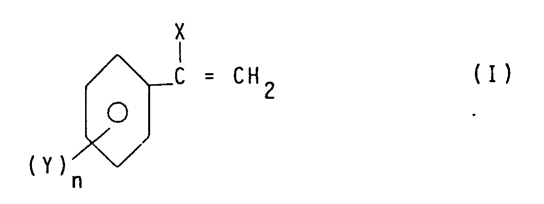
wherein X represents hydrogen or an alkyl radical having from 1 to 4 carbon atoms; n is zero or a whole number ranging between 1 and 5 and Y represents a halogen atom or an alkyl radical having from 1 to 4 carbon atoms, such a styrene-acrylonitrile copolymer (SAN).

Examples of styrenic or vinyl-aromatic ompounds having the above mentioned general formula (I) are: styrene; methylstyrene; mono-, di -, tri -, tetra-, and penta-chlorostyrene and the corresponding alpha-methyl-styrenes; styrenes alkylated in the nucleus and the corresponding alpha-methyl-styrenes such as ortho- and para-methyl-styrenes; ortho- and para-ethyl-styrenes; ortho- and para-methyl-alpha-methyl-styrenes, etc.

These monomers may be used either alone or mixed together or mixed with other copolymerizable ethylenically unsaturated co-monomers such as, for instance, maleic anhydride, acrylonitrile, methyl-methacrylate, etc., in amounts up to 50% by weight.

The high impact styrene polymer, that is particularly preferred in the present invention, consists of:
a) 70-90% by weight of a stiff matrix consisting of a copolymer containing 65-80% by weight of styrene and 35-20% by weight of acrylonitrile; and
b) 30-10% by weight of an ethylene-propylene-diene rubber.

Said high impact styrenic polymer or copolymer containing said olefinic rubber may be obtained by dissolving or by dispersing the rubber into the mixture of monomers, optionally in the presence of a solvent and by polymerizing the resulting dispersion in bulk-suspension or in continuous bulk as, for instance, described in Italian patent No. 792269.

The strengthened high impact styrenic polymers of the present invention may be prepared by blending, in a conventional apparatus, the high impact styrenic copolymer with either polyethylene, ethylene-propylene copolymers or polypropylene. In particular, the preparation of the strengthened high impact styrenic polymers of the present invention may be carried out by blending the starting polymeric products in the form of pellets in a mixer; then the blend is processed in the plastic state at a temperature ranging between 150 and 250°C, preferably between 200 and 230°C, in a mono- or biscrew extruder-granulator or in a Banbury.

The thus obtained strengthened high impact polymers, show considerable improvements concerning impact strength at room temperature and at lower temperatures, and the break elongation; therefore, said polymers prove to be particularly suitable, as before mentioned, for injection molding and thermoforming of articles to be used in the field of packaging, electrical household appliances, motor-cars, teleelectronics and so on.

The strengthened high impact styrenic polymers of the present invention may contain other compatible polymers, such as polycarbonate, polyesters, thermoplastic polyurethanes, polymethylacrylates, styrene-methyl-methacrylate copolymers, acrylic polymers, ABS, styrene-maleic anhydride copolymers, SAN, vinyl chloride polymers and other technopolymers. Such technopolymers or polymers may be added in any ratio, such as, for instance, between 10 and 90% by weight, with respect to the strengthened high impact styrenic polymer of the present invention.

Moreover, said styrenic polymers may be co-extruded together with the above mentioned polymers and technopolymers to give rise to compounds having specific characteristics for single applications.

The strengthened high impact styrenic polymers of the present invention, may be additioned with different additives such as, for instance, stabilizers, fire retardant agents, antistatic agents and so on, agents for the production of particular UV resistant articles, selfextinguishing agents, agents scarcely attracting the powders onto the surface, or glass or carbon fibres or inorganic fillers and so on. Moreover to said polymers, expanding agents may be added for the production of foamed articles. Suitable expanding agents are:
a) the chemical expanding agents such as, for instance, azodicarbonamide, which are added to the components and are let decompose in the machine (press-injection or extruder) so as to obtain foamed articles or semifinished products having a density up to three times lower than the one of the starting material;
b) the physical expanding agents such as, for instance, aliphatic hydrocarbons having a short chain (propane, butane, pentane etc.) or halogenated hydrocarbons such as freon; the pellets of the polymeric mixture are impregnated with such expanding agents and then, foamed and sintered in order to obtain articles having a density up to 30 times lower than the one of the starting material.

A few examples will be given hereinafter by way of illustration but not of limitation, in order to better understand the present invention and to carry out the same.

In the examples, all the parts and percentages are expressed by weight, unless otherwise specified.

### EXAMPLES 1-15

A mixture consisting of a styrene-acrylonitrile-EPDM copolymer (AES) (styrene/acrylonitrile = 76/24), a styrenic copolymer (SAN) containing 24% by weight of acrylonitrile and 76% by weight of styrene and a low density linear polyethylene (LLDPE) (Escorene LL1201^{R}) having a density of 0.926 and melt flow index 0.7 g/10ʹ, measured at 190°C and 2.16 kg, was fed into a rotary arm mixer at 100 revolutions minute, according to the ratios of Table 1.

The resulting mixture was extruded in a biscrew WERNER & PFLEIDERER ZSK53 extruder, by operating at a temperature of 240°C.

The extruded spaghetti, after cooling in water, were cut in the form of granules. The granules were fed into an injection press for the molding of the specimens.

The properties determined on the specimens were recorded in the following Table I, where are reported:
- total content of ethylene-propylene-diene rubber (EPDM) in the blend;
- total content of styrene + acrylonitrile (SAN) in the blend; 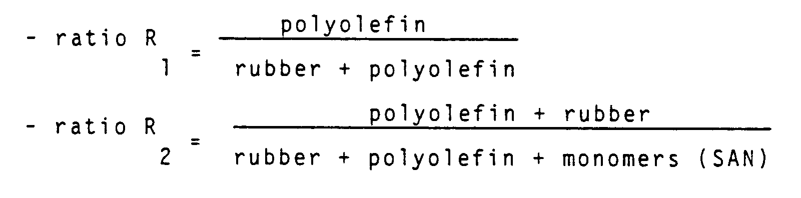
- IZOD impact strength, determined according to standard ASTM D256, at + 23°C and at -30°C;
- tensile strength, determined according to standard ASTM D638.

### EXAMPLE 16

Following the operating conditions of examples 1-15, a strengthened high impact styrenic polymer was prepared consisting of:
- 50% by weight of AES
- 40% by weigh of SAN and
- 10% by weight of high density polyethylene (HDPE) (ERACLENE HTG 6015^{R}) having density = 0.96 and melt flow index = 3 g/10ʹ, measured at 190°C and 2.16 Kg.

The contents of ethylene-propylene-diene rubber and styrene + acrylonitrile (SAN), R₁ and R₂ ratios, IZOD impact strength and tensile strength are reported on Table I.

### EXAMPLE 17

Example 16 was repeated replacing polyethylene with polypropylene (PP) (MOPLEN S 30S^{R}) having density = 0.90 and melt flow index = 1.75 g/10ʹ, measured at 230°C and 2.16 Kg.

The properties of the obtained strengthened impact resistant polymer are reported on Table I.

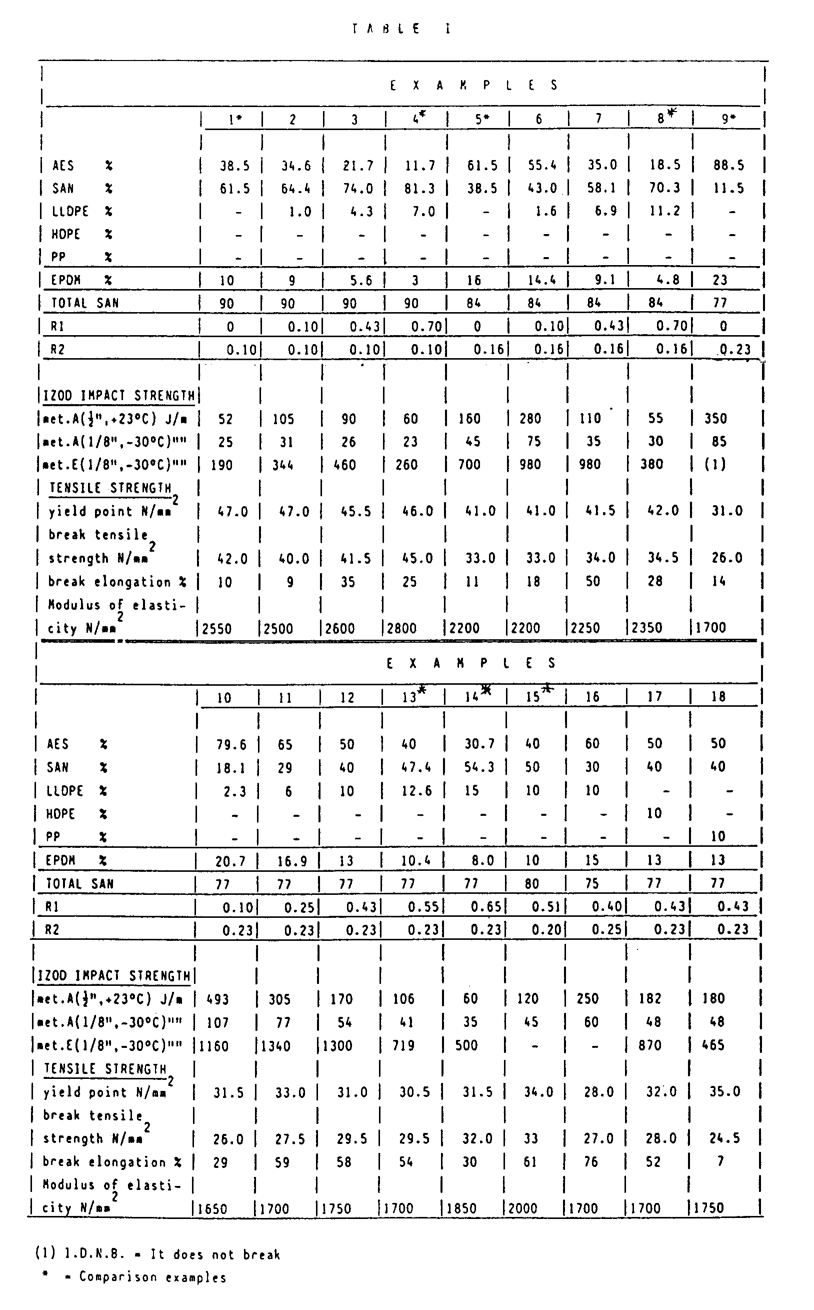

## Claims (Claims for the following Contracting State(s): DE, GB, FR, NL, SE, LI, CH, BE)

1. A strengthened high impact styrenic polymer having improved physical-mechanical properties, in particular impact strength at room temperature and at lower temperatures, high break elongation and high elastic modulus, which polymer comprises a styrene polymer containing as dispersed therein an olefinic rubber and at least one polyolefin,
characterized in that
- the high impact styrenic polymer consists of: 70-90% by weight of a stiff matrix consisting of a copolymer containing 65-80% by weight of styrene and 35-20% by weight of acrylonitrile, and 30-10% by weight of an ethylene-propylene or ethylene-propylene-diene rubber;
- the amount of the polyolefin is from 0.01 to 15 % by weight, with respect to the polymer;
- the R₁ ratio: polyolefin/polyolefin+olefinic rubber is not over 0.5; and
- the R₂ ratio: polyolefin+olefinic rubber/olefinic rubber+polyolefin+monomers is between 0.1 and 0.3.

2. A strengthened high impact styrenic polymer, according to claim 1, wherein the size of the dispersed particles ranges between 0.02 and 5 micrometers.

3. A strengthened high impact styrenic polymer, according to anyone of the preceding claims, wherein the polyolefin is selected from polyethylene, polypropylene, an ethylenepropylene copolymer containing from 75 to 98% by weight of ethylene and correspondently from 25 to 2% by weight of propylene, and a polyolefinic wax.

4. A strengthened high impact styrenic polymer, according to claim 3, wherein the polyolefin is polyethylene having a density ranging between 0.90 and 0.97 g/cm³ selected from low density polyethylene, linear low density polyethylene and high density polyethylene.

5. A strengthened high impact styrenic polymer, according to claim 1, wherein the high impact styrenic polymer is used in mixture with up to 50% by weight of polystyrene or with a copolymer containing at least 50% by weight of one or more compounds having general formula: 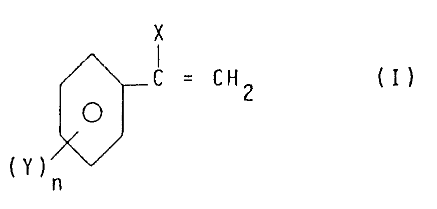 wherein X is hydrogen or an alkyl radical containing from 1 to 4 carbon atoms, n is zero or a whole number ranging between 1 and 5 and Y represents a halogen atom or an alkyl radical containing from 1 to 4 carbon atoms.

6. A strengthened high impact styrenic polymer, according to claim 5, wherein the high impact styrenic polymer is used in mixture with a styrene-acrylonitrile (SAN) copolymer.

7. A process for preparing a strengthened high impact styrenic polymer according to anyone of the preceding claims 1 to 6, which process consists in blending a high impact styrenic polymer containing as dispersed therein an olefinic rubber with at least one polyolefin and in processing the blend in the plastic state at a temperature ranging between 150° C and 250° C.

## Claims (Claims for the following Contracting State(s): AT, ES)

1. A process for preparing a strengthened high impact styrenic polymer having improved physical-mechanical properties, in particular impact strength at room temperature and at lower temperatures, high break elongation and high elastic modulus, which process consists in blending a high impact styrenic polymer containing as dispersed therein an olefinic rubber with at least one polyolefin and in processing the blend in the plastic state at a temperature ranging between 150 and 250° C, characterized in that
- the high impact styrenic polymer consists of: 70 - 90 % by weight of a stiff matrix consisting of a copolymer containing 65 - 80 % by weight of styrene and 35 - 20 % by weight of acrylonitrile, and 30 - 10 % by weight of an ethylene-propylene or ethylene-propylene-diene rubber;
- the amount of the polyolefin is from 0.01 to 15 % by weight, with respect to the polymer;
- the R₁ ratio: polyolefin/polyolefin+olefinic rubber is not over 0.5; and
- the R₂ ratio: polyolefin+olefinic rubber/olefinic rubber+polyolefin+monomers is between 0.1 and 0.3.

2. A process according to claim 1, wherein the size of the dispersed particles ranges between 0.02 and 5 micrometers.

3. A process according to anyone of the preceding claims, wherein the polyolefin is selected from polyethylene, polypropylene, an ethylene-propylene copolymer containing from 75 to 98 % by weight of ethylene and correspondently from 25 to 2 % by weight of propylene, and a polyolefinic wax.

4. A process according to claim 3, wherein the polyolefin is polyethylene having a density ranging between 0.90 and 0.97 g/cm³ selected from low density polyethylene, linear low density polyethylene and high density polyethylene.

5. A process according to claim 1, wherein the high impact styrenic polymer is used in mixture with up to 50 % by weight of polystyrene or with a copolymer containing at least 50 % by weight of one or more compounds having general formula: 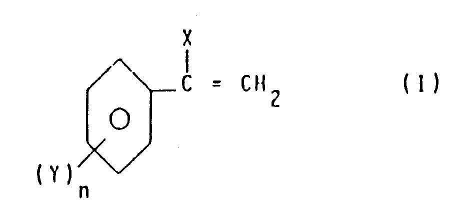 wherein X is hydrogen or an alkyl radical containing from 1 to 4 carbon atoms, n is zero or a whole number ranging between 1 and 5 and Y represents a halogen atom or an alkyl radical containing from 1 to 4 carbon atoms.

6. A process according to claim 5, wherein the high impact styrenic polymer is used in mixture with a styrene-acrylonitrile (SAN) copolymer.

## Patentansprüche (Patentansprüche für folgende(n) Vertragsstaat(en): DE, GB, FR, NL, SE, LI, CH, BE)

1. Verfestigtes hochschlagfestes Styrolpolymeres mit verbesserten physikalisch-mechanischen Eigenschaften, insbesondere Schlagfestigkeit bei Raumtemperatur und bei niedrigeren Temperaturen, hoher Bruchdehnung und hohem Elastizitätsmodul, das ein Styrolcopolymeres umfaßt, welches hierin dispergiert einen Olefinkautschuk und zumindest ein Polyolefin enthält,
dadurch gekennzeichnet, daß
- das hochschlagfeste Styrolpolymere besteht aus: 70 bis 90 Gew.-% einer steifen Matrix, bestehend aus einem Copolymeren, enthaltend 65 bis 80 Gew.-% Styrol und 35 bis 20 Gew.-% Acrylnitril, und 30 bis 10 Gew.-% eines Ethylen-Propylen- oder Ethylen-Propylen-Dien-Kautschuks;
- die Menge des Polyolefins 0,01 bis 15 Gew.-%, bezogen auf das Polymere, beträgt;
- das R₁-Verhältnis: Polyolefin/Polyolefin+Olefinkautschuk nicht über 0,5 liegt; und
- das R₂-Verhältnis: Polyolefin+Olefinkautschuk/Olefinkautschuk+Polyolefin+Monomere zwischen 0,1 und 0,3 liegt.

2. Verfestigtes hochschlagfestes Styrol-Polymeres gemäß Anspruch 1, worin die Größe der dispergierten Teilchen im Bereich zwischen 0,02 und 5 Mikrometern liegt.

3. Verfestigtes hochschlagfestes Styrolpolymeres gemäß einem der vorhergehenden Ansprüche, worin das Polyolefin aus Polyethylen, Polypropylen, einem Ethylen-Propylen-Copolymeren, enthaltend 75 bis 98 Gew.-% Ethylen und entsprechend 25 bis 2 Gew.-% Propylen, und einem Polyolefinwachs ausgewählt ist.

4. Verfestigtes hochschlagfestes Styrolpolymeres gemäß Anspruch 3, worin das Polyolefin Polyethylen mit einer Dichte im Bereich zwischen 0,90 und 0,97 g/cm³, ausgewählt unter Polyethylen niedriger Dichte, linearem Polyethylen niedriger Dichte und Polyethylen hoher Dichte, ist.

5. Verfestigtes hochschlagfestes Styrolpolymeres gemäß Anspruch 1, worin das hochschlagfeste Styrolpolymere in Mischung mit bis zu 50 Gew.-% Polystyrol oder mit einem Copolymeren, enthaltend zumindest 50 Gew.-% einer oder mehrerer Verbindungen der allgemeinen Formel 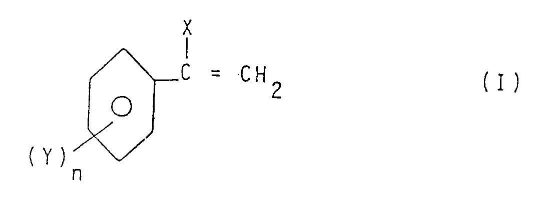 worin X Wasserstoff oder ein Alkylrest mit 1 bis 4 Kohlenstoffatomen bedeutet, n für Null oder eine ganze Zahl im Bereich zwischen 1 und 5 steht und Y ein Halogenatom oder einen Alkylrest mit 1 bis 4 Kohlenstoffatomen darstellt, verwendet wird.

6. Verfestigtes hochschlagfestes Styrolpolymeres gemäß Anspruch 5, worin das hochschlagfeste Styrolpolymere in Mischung mit einem Styrol-Acrylnitril-(SAN)-Copolymeren verwendet wird.

7. Verfahren zur Herstellung eines verfestigten hochschlagfesten Styrolpolymeren gemäß einem der vorhergehenden Ansprüche 1 bis 6, das darin besteht, ein hochschlagfestes Styrolpolymeres, das hierin dispergiert einen Olefinkautschuk enthält, mit zumindest einem Polyolefin zu mischen und die Mischung in dem plastischen Zustand bei einer Temperatur im Bereich zwischen 150 und 250°C zu verarbeiten.

## Patentansprüche (Patentansprüche für folgende(n) Vertragsstaat(en): AT, ES)

1. Verfahren zur Herstellung eines verfestigten hochschlagfesten Styrolpolymeren mit verbesserten physikalisch-mechanischen Eigenschaften, insbesondere Schlagfestigheit bei Raumtemperatur und bei niedrigeren Temperaturen, hoher Bruchdehnung und hohem Elastizitätsmodul, das darin besteht, ein hochschlagfestes Styrolpolymeres, welches hierin dispergiert einen Olefinkautschuk enthält, mit zumindest einem Polyolefin zu mischen und die Mischung in dem plastischen Zustand bei einer Temperatur im Bereich zwischen 150 und 250°C zu verarbeiten,
dadurch gekennzeichnet, daß
- das hochschlagfeste Styrolpolymere besteht aus: 70 bis 90 Gew.-% einer steifen Matrix, bestehend aus einem Copolymeren, enthaltend 65 bis 80 Gew.-% Styrol und 35 bis 20 Gew.-% Acrylnitril und 30 bis 10 Gew.-% eines Ethylen-Propylen- oder Ethylen-Propylen-Dien-Kautschuks;
- die Menge des Polyolefins 0,01 bis 15 Gew.-%, bezogen auf das Polymere, beträgt;
- das R₁-Verhältnis: Polyolefin/Polyolefin+Olefinkautschuk nicht über 0,5 liegt; und
- das R₂-Verhältnis: Polyolefin+Olefinkautschuk/Olefinkautschuk+Polyolefin+Monomere zwischen 0,1 und 0,3 liegt.

2. Verfahren gemäß Anspruch 1, worin die Größe der dispergierten Teilchen im Bereich zwischen 0,02 und 5 Mikrometern liegt.

3. Verfahren gemäß einem der vorhergehenden Ansprüche, worin das Polyolefin unter Polyethylen, Polypropylen, einem Ethylen-Propylen-Copolymeren, enthaltend 75 bis 98 Gew.-% Ethylen und dementsprechend 25 bis 2 Gew.-% Propylen, und einem Polyolefinwachs ausgewählt wird.

4. Verfahren gemäß Anspruch 3, worin das Polyolefin Polyethylen mit einer Dichte im Bereich zwischen 0,90 und 0,97 g/cm³, ausgewählt unter Polyethylen niedriger Dichte, linearem Polyethylen niedriger Dichte und Polyethylen hoher Dichte, ist.

5. Verfahren gemäß Anspruch 1, worin das hochschlagfeste Styrolpolymere in Mischung mit bis zu 50 Gew.-% Polystyrol oder mit einem Copolymeren, enthaltend zumindest 50 Gew.-% einer oder mehrerer Verbindungen der allgemeinen Formel 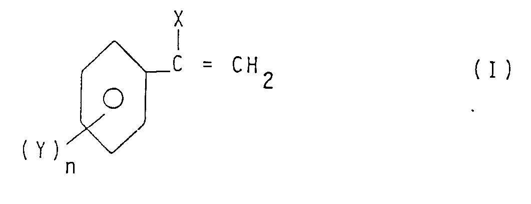 worin X Wasserstoff oder einen Alkylrest mit 1 bis 4 Kohlenstoffatomen bedeutet, n für Null oder eine ganze Zahl im Bereich zwischen 1 und 5 steht und Y ein Halogenatom oder einen Alkylrest mit 1 bis 4 Kohlenstoffatomen darstellt, verwendet wird.

6. Verfahren gemäß Anspruch 5, worin das hochschlagfeste Styrolpolymere in Mischung mit einem Styrol-Acrylnitril-(SAN)-Copolymeren verwendet wird.

## Revendications (Revendications pour l'(les) Etat(s) contractant(s) suivant(s): DE, GB, FR, NL, SE, LI, CH, BE)

1. Un polymère styrénique renforcé à haute résistance aux chocs offrant des propriétés physico-mécaniques améliorées, en particulier une résistance aux chocs à la température ambiante et à des températures plus basses, un allongement élevé à la rupture et module élastique élevé, ce polymère comprenant un polymère styrénique contenant, dispersé en son sein, un caoutchouc oléfinique et au moins une polyoléfine, caractérisé en ce que:
- le polymère styrénique à haute résistance aux chocs est constitué de:
. 70 à 90% en poids d'une matrice rigide constituée d'un copolymère contenant de 65 à 80% en poids de styrène et de 35 à 20% en poids d'acrylonitrile, et
. 30 à 10% en poids d'un caoutchouc constituéd'éthylène/propylène ou d'un caoutchouc constitué d'éthylène/propylène/diène;
- la quantité de polyoléfine est comprise entre 0,01 et 15% par rapport au poids du polymère;
- le rapport R₁: polyoléfine/polyoléfine+caoutchouc oléfinique n'est pas supérieur à 0,5; et
- le rapport R₂: polyoléfine+caoutchouc oléfinique/caoutchouc oléfinique+polyoléfine+monomères est compris entre 0,1 et 0,3.

2. Un polymère styrénique renforcé à haute résistance aux chocs selon la revendication 1, caractérisé en ce que la dimension des particules dispersées est comprise entre 0,02 et 5 »m.

3. Un polymère styrénique renforcé à haute résistance aux chocs selon l'une quelconque des revendications précédentes, caractérisé en ce que la polyoléfine est choisie parmi polyéthylène, polypropylène, un copolymère éthylènepropylène contenant de 75 à 98% en poids d'éthylène et corrélativement de 25 à 2% en poids de propylène, et une cire polyoléfinique.

4. Un polymère styrénique renforcé à haute résistance aux chocs selon la revendication 3, caractérisé en ce que la polyoléfine est un polyéthylène dont la densité est comprise entre 0,90 et 0,97 g/cm3, choisi parmi polyéthylène de faible densité, polyéthylène linéaire de faible densité et polyéthylène de densité élevée.

5. Un polymère styrénique renforcé à haute résistance aux chocs selon la revendication 1, caractérisé en ce que le polymère styrénique de haute résistance aux chocs est utilisé en mélange avec jusqu'à 50% en poids de polystyrène ou avec un copolymére contenant au moins 50% en poids d'un ou de plusieurs dérivés répondant à la formule générale: 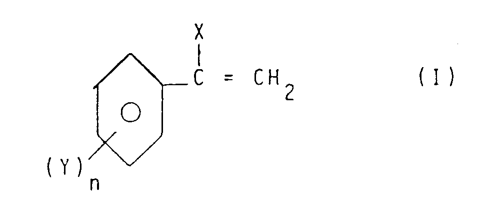 dans laquelle:
X représente un atome hydrogène ou un radical alkyle renfermant de 1 à 4 atomes de carbone,
n est égal à zéro ou est un nombre entier compris entre 1 et 5, et
y représente un atome d'halogène ou un radical alkyle contenant de 1 à 4 atomes de carbone.

6. Un polymère styrénique renforcé à haute résistance aux chocs selon la revendication 5, caractérisé en ce que le polymère styrénique à haute résistance aux chocs est utilisé en mélange avec un copolymère styrène-acrylonitrile (SAN).

7. Un procédé de préparation d'un polymère styrénique renforcé à haute résistance aux chocs selon les revendications 1 à 6, ce procédé consistant à mélanger un polymère styrénique à haute résistance aux chocs contenant, dispersé en son sein, un caoutchouc oléfinique avec au moins une polyoléfine et à traiter le mélange à l'état plastique à une température comprise entre 150 et 250°C.

## Revendications (Revendications pour l'(les) Etat(s) contractant(s) suivant(s): AT, ES)

1. Un procédé de préparation d'un polymère styrénique renforcé à haute résistance aux chocs offrant des propriétés physico-mécaniques améliorées, en particulier une résistance aux chocs à la température ambiante et à des températures plus basses, un allongement élevé à la rupture et un module élastique élevé, ce procédé consistant à mélanger un polymère styrénique à haute résistance aux chocs contenant, dispersé en son sein, un caoutchouc oléfinique avec au moins une polyoléfine et à traiter le mélange à l'état plastique à une température comprise entre 150 et 250°C, caractérisé en ce que:
- le polymère styrénique à haute résistance aux chocs est constitué de:
. 70 à 90% en poids d'une matrice rigide constituée d'un copolymère contenant de 65 à 80% en poids de styrène et de 35 à 20% en poids d'acrylonitrile, et
. 30 à 10% en poids d'un caoutchouc constitué d'éthylène/propylène ou d'un caoutchouc constitué d'éthylène/propylène/diène;
- la quantité de polyoléfine est comprise entre 0,01 et 15% par rapport au poids du polymère;
- le rapport R₁: polyoléfine/polyoléfine+caoutchouc oléfinique n'est pas supérieur à 0,5; et
- le rapport R₂: polyoléfinie+caoutchouc oléfinique/caoutchouc oléfinique+polyoléfine+monomères est compris entre 0,1 et 0,3.

2. Un procédé selon la revendication 1, caractérisé en ce que la dimension des particules dispersées est comprise entre 0,02 et 5 »m.

3. Un procédé selon l'une quelconque des revendications précédentes, caractérisé en ce que la polyoléfine est choisie parmi polyéthylène, polypropylène, un copolymère éthylène-propylène contenant de 75 à 98% en poids d'éthylène et corrélativement de 25 à 2% en poids de propylène, et une cire polyoléfinique.

4. Un procédé selon la revendication 3, caractérisé en ce que la polyoléfine est un polyéthylène dont la densité est comprise entre 0,90 et 0,97 g/cm³, choisi parmi polyéthylène de faible densité, polyéthylène linéaire de faible densité et polyéthylène de densité élevée.

5. Un procédé selon la revendication 1, caractérisé en ce que le polymère styrénique à haute résistance aux chocs est utilisé en mélange avec jusqu'à 50% en poids de polystyrène ou avec un copolymère contenant au moins 50% en poids d'un ou de plusieurs dérivés répondant à la formule générale: 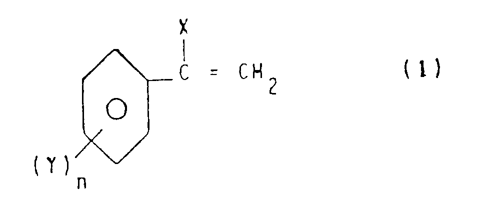 dans laquelle :
X représente un atome hydrogène ou radical alkyle contenant de 1 à 4 atomes de carbone,
n est égal à zéro ou est un nombre entier compris entre 1 et 5, et
y représente un atome d'halogène ou un radical alkyle contenant de 1 à 4 atomes de carbone.

6. Un procédé selon la revendication 5, caractérisé en ce que le polymère styrénique à haute résistances aux chocs est utilisé en mélange avec un copolymère styrène-acrylonitrile (SAN).
